# FASCICULE DE BREVET EUROPEEN

(11) **EP 3 436 367 B1**
(45) Date de publication et mention de la délivrance du brevet: **19.02.2020**
(21) Numéro de dépôt: 17726128.6
(22) Date de dépôt: 31.03.2017
(51) Int. Cl.: B65D 77/04, B65B 55/10, B65D 81/20, B65D 77/00, B65D 81/24

(54) **PROCEDE ET DISPOSITIF DE CONDITIONNEMENT DE PIECES EN ELASTOMERE.**
VERFAHREN UND VORRICHTUNG ZUR VERPACKUNG VON ELASTOMERISCHEN TEILEN
METHOD AND DEVICE FOR THE PACKAGING OF ELASTOMERIC PIECES

(30) Priorité: 01.04.2016 FR 1652862
(43) Date de publication de la demande: 06.02.2019
(73) Titulaire: Aptar Stelmi SAS, 93420 Villepinte (FR)
(72) Inventeur: FOURNIER, Ghislain, 17000 La Rochelle (FR); LE GALL, Philippe, 60300 Senlis (FR)
(74) Mandataire: CAPRI
(86) Numéro de dépôt international: PCT/FR2017/050742
(87) Numéro de publication internationale: WO 2017/191383

(56) Documents cités:
- DE-A1- 3 717 916
- DE-A1-102007 056 261
- FR-A1- 3 014 851
- US-A1- 2013 118 924

## Description

La présente invention concerne un procédé et un dispositif de conditionnement de pièces en élastomères, tels que des bouchons de récipients pharmaceutiques.

Les récipients pharmaceutiques destinés à contenir des produits pharmaceutiques sont généralement fermés, après remplissage, de manière étanche et stérile par des bouchons appropriés, typiquement réalisés en matériaux élastomères, tel que du caoutchouc. Ces bouchons peuvent être fournis prêts à l'emploi, auquel cas ils peuvent être emballés dans un sac primaire ayant une bonne perméabilité à la vapeur, typiquement un sac réalisé tout ou partie en Tyvek®, qui est un matériau synthétique non-tissé fabriqué à partir de fibres de polyéthylène. Ce sac primaire est ensuite stérilisé, en permettant le passage de vapeur lors de la stérilisation, puis ce sac primaire stérilisé est inséré dans un sac secondaire imperméable.

Ce système d'emballage présente des inconvénients. Ainsi, le sac primaire est relativement fragile, avec un risque d'endommagement, notamment après stérilisation. De plus, le sac primaire, en particulier lorsqu'il est réalisé en Tyvek®, est susceptible, notamment s'il a des imperfections, de laisser passer des bactéries, avant et/ou après stérilisation. Pour surmonter ces inconvénients, on prévoit généralement plusieurs sacs primaires disposés les uns par-dessus les autres, ce qui limite les risques susvisés, mais ne les élimine pas. Un autre inconvénient du système d'emballage conventionnel est la non-visualisation d'une éventuelle perte d'intégrité du sac primaire et/ou du sac secondaire.

Les documents FR3014851, DE3717916, DE102007056261 et US2013/118924 décrivent des dispositifs de l'art antérieur.

La présente invention a pour objectif de fournir un procédé et un dispositif de conditionnement de pièces en élastomère qui ne reproduisent pas les inconvénients susmentionnés.

En particulier, la présente invention a pour but d'éviter au maximum les risques de contamination bactérienne, avant et/ou après stérilisation.

La présente invention a donc pour objet un procédé de conditionnement de pièces en élastomère, tels que des bouchons de récipients pharmaceutiques, comportant les étapes suivantes :
- conditionnement des pièces dans au moins un sac primaire en matériau sensiblement perméable à la vapeur,
- conditionnement dudit au moins un sac primaire dans un organe de support sensiblement rigide, pour former un ensemble,
- stérilisation à la vapeur dudit ensemble, et
- conditionnement dudit ensemble stérilisé dans au moins un sac secondaire, avec application d'un vide entre ledit au moins un sac primaire et ledit au moins un sac secondaire.

La présente invention a aussi pour objet un dispositif de conditionnement de pièces en élastomère, tels que des bouchons de récipients pharmaceutiques, comportant au moins un sac primaire en matériau perméable à la vapeur recevant lesdites pièces, un organe de support et au moins un sac secondaire, ledit au moins un sac primaire étant conditionné dans ledit organe de support sensiblement rigide pour former un ensemble stérilisable, ledit ensemble stérilisé étant conditionné dans l'au moins un sac secondaire avec application d'un vide entre ledit au moins un sac primaire et ledit au moins un sac secondaire.

Avantageusement, ledit au moins un sac primaire est réalisé tout ou partie en Tyvek®.

Avantageusement, ledit sac secondaire comporte plusieurs couches, notamment une structure tri-couches ou quadri-couches.

Avantageusement, ledit sac secondaire multicouche comporte une couche en aluminium.

Avantageusement, ledit sac secondaire multicouche comporte une structure tri-couches avec une couche interne en polyamide, une couche en aluminium et une couche externe en polyéthylène.

En variante, ledit sac secondaire multicouche comporte une structure quadri-couches avec une couche interne en polyéthylène téréphtalate, une couche en aluminium, une couche en polyamide et une couche externe en polyéthylène.

Selon une autre variante avantageuse, ledit sac secondaire multicouche comporte une structure tri-couches avec une couche interne en polyéthylène, une couche en polyamide et une couche externe en polyéthylène.

Selon une première variante avantageuse, ledit organe de support est une enceinte ouverte.

Selon une seconde variante avantageuse, ledit organe de support est une enceinte fermée.

Avantageusement, ledit organe de support est au moins partiellement réalisé en un matériau perméable à la vapeur.

En variante, ledit organe de support est réalisé en un matériau imperméable.

Avantageusement, ledit organe de support comporte au moins une ouverture de passage de vapeur.

Ces caractéristiques et avantages et d'autres de la présente invention apparaîtront plus clairement au cours de la description détaillée suivante, faite en référence aux dessins joints, donnés à titre d'exemples non-limitatifs, et sur lesquels :
la figure 1 est une vue schématique d'un dispositif de conditionnement de pièces en élastomères, en phase initiale de conditionnement,
la figure 2 est une vue schématique du dispositif de la figure 1, en phase de stérilisation, et
la figure 3 est une vue schématique du dispositif des figures 1 et 2, en phase finale de conditionnement.

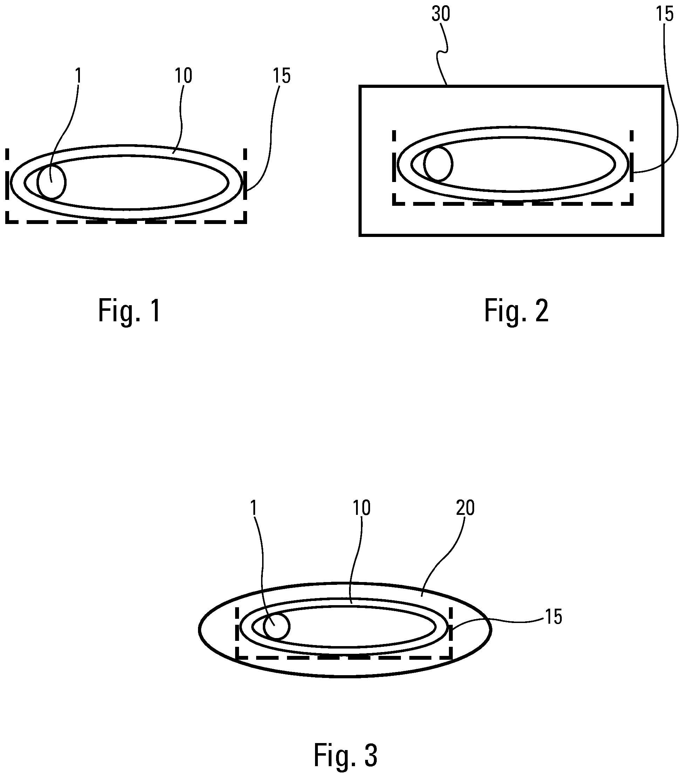

Les figures 1 à 3 sont schématiques, et il est entendu que la forme des différents éléments n'est pas représentative des formes réelles ou des échelles. En particulier, les pièces peuvent être en nombre quelconque et de formes quelconques, et les formes et dimensions des sacs peuvent également être quelconques.

De manière conventionnelle, des pièces en élastomère 1, tels que des bouchons de récipients pharmaceutiques, sont conditionnés dans un dispositif de conditionnement comportant un sac primaire 10 recevant directement lesdites pièces. Eventuellement, on peut prévoir plusieurs sacs primaires, notamment deux, disposés les uns dans les autres, pour renforcer la protection des pièces en élastomères.

Avantageusement, le dispositif de conditionnement comporte en outre un sac secondaire 20 recevant ledit sac primaire 10, comme illustré sur la figure 3. On peut aussi prévoir plusieurs sacs secondaires, disposés les uns par-dessus les autres.

Selon l'invention, on prévoit un organe de support 15 sensiblement rigide recevant ledit sac primaire 10 avant stérilisation dans une enceinte de stérilisation 30.

Cet organe de support 15 peut former une enceinte ouverte, par exemple en étant ajouré. Il peut par exemple être formé par une grille ou une caisse au moins partiellement ajourée, avec ou sans couvercle.

L'organe de support 15 peut aussi former une enceinte fermée.

Cet organe de support 15 est de préférence réalisé dans un matériau compatible avec les paramètres d'un procédé de stérilisation. Il peut être réalisé au moins partiellement en un matériau perméable à la vapeur. En variante, il peut être réalisé en un matériau imperméable. Notamment dans ce dernier cas, l'organe de support 15 doit comporter au moins une ouverture de passage de vapeur, par exemple une grille ajourée ou des petits trous. Ces ouvertures de passage de vapeur sont avantageusement dimensionnées de façon à ne pas contraindre les pièces lors de la compression du sac secondaire, typiquement de l'ordre de quelques millimètres, éventuellement de l'ordre du centimètre. Eventuellement, on pourrait combiner l'utilisation d'un matériau perméable à la vapeur avec des ouvertures de passage de vapeur, pour optimiser la stérilisation des pièces disposées à l'intérieur dudit organe de support.

Le sac primaire 10 contenant les pièces en élastomères 1 est donc d'abord disposé dans ledit organe de support 15, puis cet ensemble est stérilisé dans une enceinte de stérilisation 30.

Cet ensemble stérilisé est ensuite conditionné en zone contrôlée dans le sac secondaire 20.

Un vide d'air est ensuite réalisé entre le sac primaire 10 et le sac secondaire 20. Ce vide d'air permet de détecter un éventuel problème d'intégrité, qui se manifesterait par une perte de vide provoquant la désolidarisation desdits sacs.

La présence de l'organe de support 15 au moins partiellement autour dudit sac primaire 10 protège celui-ci lors des diverses manipulations, en limitant donc le risque de dégradation et/ou d'endommagement du sac primaire 10.

Lors de la mise sous vide du sac secondaire 20, le faite que le sac primaire 10 soit au moins partiellement disposé dans un organe de support 15 sensiblement rigide permet aussi d'éviter la compression des pièces en élastomères 1 contenues dans ledit sac primaire 10. Si l'organe de support 15 comporte des ouvertures de passage de vapeur, il est souhaitable que ces ouvertures soient assez petites pour éviter une déformation excessive du sac secondaire par étirement lors de l'application du vide.

Le sac primaire 10 est de préférence réalisé en un matériau ayant une bonne perméabilité à la vapeur, typiquement un sac réalisé tout ou partie en Tyvek®.

Le sac secondaire 20 peut comporter plusieurs couches, notamment une structure tri-couches ou quadri-couches.

Avantageusement, le sac secondaire multicouche comporte une couche en aluminium. Ceci permet de garantir le taux d'humidité des pièces conditionnées. Par exemple, le sac secondaire multicouche peut comporter une structure tri-couches avec une couche interne en polyamide, une couche en aluminium et une couche externe en polyéthylène, ou une structure quadri-couches avec une couche interne en polyéthylène téréphtalate, une couche en aluminium, une couche en polyamide et une couche externe en polyéthylène.

Si le taux d'humidité des pièces conditionnées n'a pas besoin d'être garanti, le sac secondaire 20 peut comporter une structure multicouche sans couche d'aluminium, par exemple une structure tri-couches avec une couche interne en polyéthylène, une couche en polyamide et une couche externe en polyéthylène.

Il est à noter que le polyamide peut être à orientation biaxiale.

D'autres matériaux et/ou structures sont envisageables pour le/les sac(s) primaire(s) 10 et/ou pour le/les sac(s) secondaire(s) 20.

L'invention a été décrite plus particulièrement en référence à des bouchons de récipients pharmaceutiques, mais elle peut aussi s'appliquer à d'autres types de pièces en élastomère, tels que par exemple des pistons de seringue ou des protège-aiguilles de seringues.

La présente invention a été décrite en référence à un mode de réalisation particulier, mais il est entendu qu'elle n'est pas limitée par celui-ci mais qu'au contraire l'homme du métier peut y apporter toutes modifications utiles sans sortir du cadre de la présente invention tel que défini par les revendications annexées.

## Revendications

1. Procédé de conditionnement de pièces en élastomère (1), tels que des bouchons de récipients pharmaceutiques, **caractérisé en ce qu'**il comporte les étapes suivantes :
- conditionnement des pièces (1) dans au moins un sac primaire (10) en matériau sensiblement perméable à la vapeur,
- conditionnement dudit au moins un sac primaire (10) dans un organe de support (15) sensiblement rigide, pour former un ensemble,
- stérilisation à la vapeur dudit ensemble, et
- conditionnement dudit ensemble stérilisé dans au moins un sac secondaire (20), avec application d'un vide entre ledit au moins un sac primaire (10) et ledit au moins un sac secondaire (20).

2. Dispositif de conditionnement de pièces en élastomère (1), tels que des bouchons de récipients pharmaceutiques, comportant au moins un sac primaire (10) en matériau perméable à la vapeur recevant lesdites pièces (1), un organe de support (15) et au moins un sac secondaire (20), ledit au moins un sac primaire (10) étant conditionné dans ledit organe de support (15) sensiblement rigide pour former un ensemble stérilisable, ledit ensemble stérilisé étant conditionné dans l'au moins un sac secondaire (20) avec application d'un vide entre ledit au moins un sac primaire (10) et ledit au moins un sac secondaire (20).

3. Dispositif selon la revendication 2, dans lequel ledit au moins un sac primaire (10) est réalisé tout ou partie en Tyvek®.

4. Dispositif selon la revendication 2 ou 3, dans lequel ledit sac secondaire (20) comporte plusieurs couches, notamment une structure tri-couches ou quadri-couches.

5. Dispositif selon la revendication 4, dans lequel ledit sac secondaire (20) multicouche comporte une couche en aluminium.

6. Dispositif selon la revendication 5, dans lequel ledit sac secondaire (20) multicouche comporte une structure tri-couches avec une couche interne en polyamide, une couche en aluminium et une couche externe en polyéthylène.

7. Dispositif selon la revendication 5, dans lequel ledit sac secondaire (20) multicouche comporte une structure quadri-couches avec une couche interne en polyéthylène téréphtalate, une couche en aluminium, une couche en polyamide et une couche externe en polyéthylène.

8. Dispositif selon la revendication 4, dans lequel ledit sac secondaire (20) multicouche comporte une structure tri-couches avec une couche interne en polyéthylène, une couche en polyamide et une couche externe en polyéthylène.

9. Dispositif selon l'une quelconque des revendications 2 à 8, dans lequel ledit organe de support (15) est une enceinte ouverte.

10. Dispositif selon l'une quelconque des revendications 2 à 8, dans lequel ledit organe de support (15) est une enceinte fermée.

11. Dispositif selon l'une quelconque des revendications 2 à 10, dans lequel ledit organe de support (15) est au moins partiellement réalisé en un matériau perméable à la vapeur.

12. Dispositif selon l'une quelconque des revendications 2 à 10, dans lequel ledit organe de support (15) est réalisé en un matériau imperméable.

13. Dispositif selon l'une quelconque des revendications 2 à 12, dans lequel ledit organe de support (15) comporte au moins une ouverture de passage de vapeur.

## Patentansprüche

1. Verfahren zur Verpackung von elastomerischen Teilen (1), wie Stöpsel von pharmazeutischen Behältern, **dadurch gekennzeichnet, dass** es die folgenden Schritte umfasst:
- Verpacken der Teile (1) in wenigstens einem primären Beutel (10) aus im Wesentlichen dampfdurchlässigem Material,
- Verpacken des wenigstens einen primären Beutels (10) in einem im Wesentlichen starren Trägerorgan (15), um eine Einheit zu bilden,
- Dampfsterilisieren der Einheit, und
- Verpacken der sterilisierten Einheit in wenigstens einem sekundären Beutel (20) mit Anlegen eines Vakuums zwischen dem wenigstens einen primären Beutel (10) und dem wenigstens einen sekundären Beutel (20).

2. Vorrichtung zur Verpackung von elastomerischen Teilen (1), wie Stöpsel von pharmazeutischen Behältern, umfassend wenigstens einen primären Beutel (10) aus dampfdurchlässigem Material, der die Teile (1) aufnimmt, ein Trägerorgan (15) und wenigstens einen sekundären Beutel (20), wobei der wenigstens eine primäre Beutel (10) in dem im Wesentlichen starren Trägerorgan (15) verpackt wird, um eine sterilisierbare Einheit zu bilden, wobei die sterilisierte Einheit in dem wenigstens einen sekundären Beutel (20) verpackt wird, wobei ein Vakuum zwischen dem wenigstens einen primären Beutel (10) und dem wenigstens einen sekundären Beutel (20) angelegt wird.

3. Vorrichtung nach Anspruch 2, wobei der wenigstens eine primäre Beutel (10) vollständig oder teilweise aus Tyvek® hergestellt ist.

4. Vorrichtung nach Anspruch 2 oder 3, wobei der sekundäre Beutel (20) mehrere Lagen umfasst, insbesondere eine dreilagige oder vierlagige Struktur.

5. Vorrichtung nach Anspruch 4, wobei der mehrlagige sekundäre Beutel (20) eine Lage aus Aluminium umfasst.

6. Vorrichtung nach Anspruch 5, wobei der mehrlagige sekundäre Beutel (20) eine dreilagige Struktur mit einer inneren Lage aus Polyamid, einer Lage aus Aluminium und einer äußeren Lage aus Polyethylen umfasst.

7. Vorrichtung nach Anspruch 5, wobei der mehrlagige sekundäre Beutel (20) eine vierlagige Struktur mit einer inneren Lage aus Polyethylenterephthalat, einer Lage aus Aluminium, einer Lage aus Polyamid und einer äußeren Lage aus Polyethylen umfasst.

8. Vorrichtung nach Anspruch 4, wobei der mehrlagige sekundäre Beutel (20) eine dreilagige Struktur mit einer inneren Lage aus Polyethylen, einer Lage aus Polyamid und einer äußeren Lage aus Polyethylen umfasst.

9. Vorrichtung nach einem der Ansprüche 2 bis 8, wobei das Trägerorgan (15) eine offene Kammer ist.

10. Vorrichtung nach einem der Ansprüche 2 bis 8, wobei das Trägerorgan (15) eine geschlossene Kammer ist.

11. Vorrichtung nach einem der Ansprüche 2 bis 10, wobei das Trägerorgan (15) wenigstens teilweise aus einem dampfdurchlässigen Material hergestellt ist.

12. Vorrichtung nach einem der Ansprüche 2 bis 10, wobei das Trägerorgan (15) aus einem undurchlässigen Material hergestellt ist.

13. Vorrichtung nach einem der Ansprüche 2 bis 12, wobei das Trägerorgan (15) wenigstens eine Dampfdurchlassöffnung umfasst.

## Claims

1. A packaging method for packaging elastomer parts (1), such as stoppers for pharmaceutical containers, the method being **characterized in that** it comprises the following steps:
• packaging parts (1) in at least one primary bag (10) made of material that is substantially permeable to vapor,
• packaging said at least one primary bag (10) in a support member (15) substantially rigid , so as to form a unit,
• vapor-sterilizing said unit, and
• packaging said sterilized unit in at least one secondary bag (20), with a vacuum being applied between said at least one primary bag (10) and said at least one secondary bag (20).

2. A packaging device for packaging elastomer parts (1), such as stoppers for pharmaceutical containers, comprising at least one primary bag (10), made of material that is permeable to vapor, receiving said parts (1), a support member (15) and at least one secondary bag (20) said at least one primary bag (10) being packaged in said support member (15) substantially rigid so as to form a sterilizable unit, said sterilized unit being packaged in the at least one secondary bag (20) with application of a vacuum between said at least one primary bag (10) and said at least one secondary bag (20).

3. A device according to claim 2, wherein said at least one primary bag (10) is made entirely or in part out of Tyvek®.

4. A device according to claim 2 or claim 3, wherein said secondary bag (20) comprises a plurality of layers, in particular a three-layer or four-layer structure.

5. A device according to claim 4, wherein said multilayer secondary bag (20) includes a layer made of aluminum.

6. A device according to claim 5, wherein said multilayer secondary bag (20) comprises a three-layer structure with an inner layer made of polyamide, a layer made of aluminum, and an outer layer made of polyethylene.

7. A device according to claim 5, wherein said multilayer secondary bag (20) comprises a four-layer structure with an inner layer made of polyethylene terephthalate, a layer made of aluminum, a layer made of polyamide, and an outer layer made of polyethylene.

8. A device according to claim 4, wherein said multilayer secondary bag (20) comprises a three-layer structure with an inner layer made of polyethylene, a layer made of polyamide, and an outer layer made of polyethylene.

9. A device according to any one of claims 2 to 8, wherein said support member (15) is an open chamber.

10. A device according to any one of claims 2 to 8, wherein said support member (15) is a closed chamber.

11. A device according to any one of claims 2 to 10, wherein said support member (15) is at least in part, of a material that is permeable to vapor.

12. A device according to any one of claims 2 to 10, wherein said support member (15) is made of a material that is impermeable.

13. A device according to any one of claims 2 to 12, wherein said support member (15) includes at least one opening through which vapor passes.
